# EUROPÄISCHE PATENTSCHRIFT

(11) **EP 2 240 554 B1**
(45) Veröffentlichungstag und Bekanntmachung des Hinweises auf die Patenterteilung: **13.09.2017**
(21) Anmeldenummer: 08773285.5
(22) Anmeldetag: 30.06.2008
(51) Int. Cl.: C10B 47/46, C10B 53/02, C10B 53/07, C10J 3/58

(54) **VERFAHREN UND VORRICHTUNG ZUR DURCHFÜHRUNG EINER PYROLYSE**
METHOD AND DEVICE TO PERFORM A PYROLYSIS
PROCÉDÉ ET DISPOSITIF PERMETTANT D'EFFECTUER UNE PYROLYSE

(30) Priorität: 28.01.2008 DE 202008001239 U; 27.06.2008 DE 102008030983; 27.06.2008 DE 202008008767 U
(43) Veröffentlichungstag der Anmeldung: 20.10.2010
(73) Patentinhaber: Projahn, Corina, 39112 Magdeburg (DE)
(72) Erfinder: Projahn, Corina, 39112 Magdeburg (DE)
(74) Vertreter: Kietzmann, Manfred
(86) Internationale Anmeldenummer: PCT/DE2008/001090
(87) Internationale Veröffentlichungsnummer: WO 2009/094962

(56) Entgegenhaltungen:
- WO-A-00/11110
- WO-A-2007/006280
- DE-A1- 10 058 162
- DE-C1- 19 852 808
- DE-U1- 20 314 205

## Beschreibung

Die Erfindung betrifft eine umweltschonende und saubere industrielle Anlage zum Verschwelen von kohlenwasserstoffhaltigen Substanzen jedweder Art zur Gewinnung von zum Beispiel Kohlenstoffgranulat, Pyrolyseöl, Pyrolysegas und metallischen Bestandteilen.

Pyrolyseverfahren zur Behandlung von organischen Stoffen und Stoffgemischen sind allgemein bekannt.

So beschreibt beispielsweise die DE 695 11 626 T2 die Pyrolyse von Abfällen in einem intern beheiztem Drehofen.

In der DE 199 30 071 C2 wird über ein Verfahren und eine Vorrichtung zur Pyrolyse und Vergasung von organischen Stoffen und Stoffgemischen berichtet. Hierbei wird das organische Material mit dem Wirbelbettmaterial der Verbrennungswirbelschicht in Kontakt gebracht. Es entstehen Pyrolyseprodukte in Form von Gasen mit kondensierbaren Substanzen und kohlenstoffhaltigen Rückständen.

Mit der DE 44 41 423 Al werden ein Pyrolyseverfahren und eine Vorrichtung beschrieben, die zur Gewinnung von verwertbarem Gas aus Müll führt. Dabei wird eine Pyrolysetrommel eingesetzt.

In der DE 41 26 319 A1 wird über ein Verfahren zur Pyrolyse von Silikonkautschukvulkanisaten berichtet, bei dem die Vulkanisate auf 350 °C bis 700 °C erhitzt und die dabei entstehenden flüchtigen Siloxane kondensiert werden. Es entstehen als Produkte insbesondere Siloxane und Füllstoffe.

Das Patent DE 40 11 945 C1 beschreibt eine Niedrigtemperatur-Pyrolyse zur Entgasung von organischem Material in einer beheizten Pyrolysekammer, bei der das Pyrolysegut verdichtet wird und in diesem Zustand die Kammer durchläuft. Die gasförmigen Pyrolyseprodukte werden abgeführt.

In der DE 39 32 803 A wird ein pyrolytisches Verfahren beschrieben, das organische Materialien unter Zusatz von Borsäure/Boroxid und organischen Stickstoffverbindungen in nichtoxidierender Atmosphäre zu Kohle und Graphit reagieren lässt.

Das Patent DE 28 34 475 C2 erläutert ein Verfahren zur Behandlung eines Pyrolyse-Heizöls. Im Ergebnis dieses Verfahrens entsteht durch die Anwendung einer Promotor-Flüssigkeit ein spezieller Kohlenstoff (Nadelkoks).

Die bisher bekannten Verfahren arbeiten mit Drehrohrofen, Pyrolysetrommeln, in der Wirbelschicht, unter Druck, mit Verdichten des Materials oder unter inerter Atmosphäre. Hier sind erhöhte Aufwendungen für Vorrichtungen, an Material, Energie und Logistik notwendig.

Durch die Nutzung von Schutzgasen (nichtoxidierender Atmosphäre) fällt die Durchsatzleistung bei vergleichbaren Einheiten geringer aus. Die Erzeugung einer Wirbelschicht bedingt einen erhöhten Energieaufwand, da einmal die Wirbelschicht "unterhalten" werden muss, andererseits die zu pyrolysierenden Materialien mechanisch so aufgearbeitet werden müssen, dass sie mit der Wirbelschicht wirksam kontaktieren können.

Speziell mit der Pyrolyse von Altreifen ohne Vorbehandlung bzw. mit einem Vorabzerschreddern beschäftigen sich folgende Veröffentlichungen.

In der DE 100 15 721 A1 wird eine Vorrichtung und ein Verfahren vorgeschlagen, bei dem Altreifen ohne Vorbehandlung einer Pyrolyse bei maximal 500°C unterzogen werden sollen. Es kommt eine elektrische Heizung zum Einsatz, die kontinuierlich aufheizt und wenn zwischen Außen- und Innenbehälter maximal 500°C erreicht sind, wird die Temperatur auf 500°C bis zum Abschluss der Vergasung gehalten. Ausführlich wird als mögliche Alternative zu elektrischen Heizelementen eine Innenwandbeschichtung des Außenbehälters mit technischer Keramik beschrieben, die elektrisch aufheizbar ist. Anstelle der Beschichtung können auch Stabelemente aus SiC oder damit beschichtete eingesetzt werden.

In der WO 00/11110 A1 werden vorbehandelte zerstückelte Altreifen als Ausgangsstoff eingesetzt. Das Aufheizen erfolgt mit einem Gas, das aufgeheizt in den Pyrolyseofen und über Öffnungen in den Reaktor geleitet, durch eine Gasabzugsleitung wieder abgeführt und zumindest teilweise wieder als Heizgas aufbereitet in den Pyrolyseofen geleitet wird.
Der Prozess beginnt mit dem Einlass von aufgeheiztem Nitrogengas, dem sich mit Beginn der Pyrolyse Pyrolysegas beimischt. Die Pyrolyseanlage verfügt über Messeinrichtungen für die Analyse der Zusammensetzung des Pyrolysegases und dessen Temperaturmessung, wobei die Messwerte zur Steuerung des Gaskreislaufes eingesetzt werden.

Mit der WO 2007/006280 A2 wird vorgeschlagen die Temperatur in einem nicht näher erläuterten Thermoofen in 3 zeitlich definierten Stufen auf 480 - 600°C zu erhöhen, wobei innerhalb der Stufen die Temperatur konstant sein soll. Die Temperaturen im Reaktor sollen regelbar sein und die Aufrechterhaltung der Temperatur im Reaktor soll über Thermostate erfolgen.

Die DE 203 14 205 U1 beschäftigt sich mit einer gleichmäßigeren Temperaturverteilung im Pyrolyseofen, in dem innerhalb des Ofens Reflektorbleche angeordnet sind und die Außenwände eine mehrlagige Wärmeisolierung aufweisen. Mittels einer am Reaktordeckel angeordneten Gasabzugsvorrichtung mit einem Kugelventil werden die Pyrolysegase in eine Kühleinrichtung abgeführt.

Die DE 100 58 162 A1 schlägt zur Erzielung einer verbesserten Granulatqualität und der vollständigen Umwandlung von Schwelgas in Oel vor, die Altgummiprodukte in einem Trockenraum auf ca. 30°C vorzuwärmen, bevor sie in den Reaktor eingebracht werden. Der Reaktor wird in ca. 60 Minuten auf 450°C erwärmt und für ca. 2,5 Stunden bei dieser Temperatur gehalten. Daraus schließt sich eine Abkühlung des Reaktors im Trockenraum auf eine Außenwandtemperatur von 25 - 30°C an, bevor der Reaktor geöffnet wird. Anfallendes Granulat wird gemäß der DE 198 52 808 C1 als Zuschlagstoff in Baustoffen und Bauelementen, zur Wärmedünnung als Absorptions- und/oder Adsorptionsmittel für Oele und Fette und als Feuerlöschmittel verwendet.

Diese Verfahren und Vorrichtungen haben wesentliche Nachteile. Zum einen ist die Qualität der Pyrolyseprodukte nicht nur nicht ausreichend, sondern auch nicht stabil gewährleistet. Die technische Ursache dürfte in erster Linie im Nichtbeherrschen einer optimalen Pyrolysetemperatur über den Pyrolysezeitraum zu suchen sein. Zum anderen kommt insbesondere bei der WO 00/11110 A1 hinzu, dass ein großer apparativer Aufwand notwendig ist.

Aufgabe der Erfindung ist es, eine neuartige energetisch und wirtschaftlich vorteilhafte Technologie zur Verschwelung von unterschiedlichen kohlenwasserstoffhaltigen Substanzen vorzuschlagen, die eine hohe und stabile Qualität der Endprodukte durch eine optimierte Regelung der Pyrolysebedingungen garantiert, wobei insbesondere Altreifen ohne Vorbehandlung der Technologie zugängig sein sollen.

Gelöst wird diese Aufgabe mit den Merkmalen des Vorrichtungsanspruches 1; ein Arbeitsverfahren beschreibt Anspruch 13.

Erfindungsgemäß wird zur Durchführung einer Mitteltemperaturpyrolyse eine Vorrichtung vorgeschlagen mit einem zylinderförmigen Pyrolyseofen, dessen Innenflächen mit einer Isolierschicht aus einem anorganischen Wärmedämmstoff versehen sind, wobei auf oder an den Innenflächen der Isolierschichten Heizelemente angeordnet sind.

In den Pyrolyseofen ist ein Reaktionsbehälter zylinderförmiger Form einbringbar, der oben offen und mit einem Deckel in Form eines gewölbten Bodens, vorzugsweise eines Klöpperbodens, verschließbar ist, wobei der Deckel mindestens eine mit einer Gasabzugsleitung aus dem Pyrolyseofen verbindbare Gasaustrittsöffnung aufweist und im Deckel ein die Gasaustrittsöffnung umschließender Siebkörper angeordnet ist, der mit seinen Außenkanten mit der Innenfläche des Deckels abschließt.

Weiter ist im Reaktionsbehälter oberhalb des zu verschwelenden Gutes eine Vorrichtung zum Abtrennen von hochreinem Feinruß angeordnet, die aus einem Lochblech besteht, das seitlich an der Reaktionsbehälterwand abgestützt ist und auf dem senkrecht und nach oben weisende Lochbleche angeordnet sind.

Mit der mindestens einen Gasabzugsleitung ist eine Kühlschlange zum Kondensieren des Pyrolyseöles verbunden. Das Pyrolyseöl wird in einem Pyrolyseölauffangbehälter gesammelt, während das verbleibende Pyrolysegas einem Gassammler zugeleitet wird.

Von zentraler Bedeutung für die Funktionsfähigkeit des Pyrolyseofens ist eine Steuereinheit zur Steuerung und Regelung der Heizelemente, wobei die Steuereinheit mit Mitteln zur Detektion der Pyrolysegasentwicklung und mindestens einem Temperatursensor zur Bestimmung der Pyrolysegastemperatur gekoppelt ist, derart, dass in Abhängigkeit von der detektierten Pyrolysegasentwicklung und /oder vorgegebener Pyrolysegastemperaturen und/oder einer vorgegebenen Zeit eine stufenweise Reduzierung der Aufheizleistung von Heizelementen bis hin zum Ausschalten aller Heizelemente steuer- oder regelbar ist.

Verfahrensseitig wird bei der vorgeschlagenen Mitteltemperaturpyrolyse bevorzugt nach dem Beladen des Pyrolyseofens mit einem mit verschwelbaren Gut gefüllten Reaktionsbehälter einzelne oder alle Heizelemente des Pyrolyseofens auf eine vorgegebene erste Heiztemperatur aufgeheizt, wobei mittels eines Sensors zur Detektion der Pyrolysegasentwicklung eine Pyrolysegasentwicklung detektiert wird.

In anderen Worten: In einer ersten Phase der Pyrolyse werden einzelne oder aber bevorzugt alle Heizelemente im Pyrolyseofen auf eine erste Heiztemperatur aufgeheizt. Die Heiztemperatur liegt zwischen 650°C und 820°C. Die erste Phase wird solange aufrecht erhalten bis der Pyrolysevorgang im Reaktor soweit fortgeschritten ist, dass Pyrolysegas bestimmter Güte oder Zusammensetzung oder mit bestimmten Eigenschaften entsteht. Vorzugsweise wird die Brennbarkeit oder Zündfähigkeit des Pyrolysegases bestimmt, welche als Qualitätsmaßstab für das entstandene Gas verwendet wird.

Die Brennbarkeit bzw. Zündfähigkeit des Gases kann mittels entsprechender Sensoren erfolgen, welche, den entsprechenden Sicherheitsanforderungen gehorchend, in oder an der Gasabzugsleitung angeordnet sind. Alternativ kann eine Zündprobe auch manuell durchgeführt werden.

Insofern andere Eigenschaften oder Zusammensetzungen des Pyrolysegases als Charakteristikum für den Fortschritt der Pyrolyse herangezogen werden, sind entsprechende Analysesensoren wie Sensoren für bestimmte Gasbestandteile oder deren Konzentrationen einsetzbar. Die Aufzählung ist nicht begrenzend, sondern erfasst sämtliche Detektionsmethoden.

Bei Detektion einer Pyrolysegasentwicklung beispielsweise durch Detektion der Brennbarkeit des Pyrolysegases werden mittels der Steuereinheit die Heizelemente angesteuert nach Maßgabe der Einregelung auf eine einer zweiten Phase der Pyrolyse vorgegebenen zweiten Heiztemperatur, die unterhalb der ersten Heiztemperatur liegt, und/oder nach Maßgabe der Einstellung einzelner Gruppen von Heizelementen auf den Betriebszustand "aus".

Wiederum in anderen Worten ausgedrückt, die zweite Pyrolysephase beginnt mit Detektion eines Pyrolysegases mit entsprechender Güte oder Zusammensetzung oder Eigenschaft. Mit der Detektion wird die Heiztemperatur einzelner oder aber auch aller Heizelemente auf eine gegenüber der ersten Phase deutlich niedrigere Heiztemperatur eingestellt. In der zweiten Phase der Pyrolyse beträgt die durch Heizkörper generierbare zweite Heiztemperatur insbesondere zwischen 450°C und 520°C.

Es können auch einzelne Heizelemente ganz abgeschaltet werden, so dass eine Beheizung des Reaktorbehälters nur über einen Teil der Heizelemente erfolgt. Vorzugsweise werden in der zweiten Phase die Heizelemente an der Decke des Pyrolyseofens ausgeschaltet und die Beheizung erfolgt nur noch über die restlichen Heizelemente. Auch kann die Heiztemperatur einzelner Heizelemente unterschiedlich hoch eingestellt sein.

Mittels eines Temperatursensors wird sodann eine vorgegebene Pyrolysegastemperatur detektiert, und bei Detektion einer vorgegebenen Pyrolysegastemperatur werden die Heizelemente über die Steuereinheit erneut angesteuert nach Maßgabe der Einstellung aller Heizelemente auf den Betriebszustand "aus".

Die tatsächliche Reaktionstemperatur liegt aufgrund der exotherm ablaufenden Pyrolyse höher als die durch die Heizkörper generierbare Temperatur.

Die mittels eines Temperatursensors bestimmbare vorgegebene Pyrolysegastemperatur ist bevorzugt eine Temperatur unterhalb 140°C, vorzugsweise eine Temperatur zwischen 100°C und 110°C.

Mit der vorgeschlagenen Anlage verfahrensgemäß betrieben lassen sich zum Beispiel aus Altreifen, Gummi oder Rapskuchen neben Pyrolysegas als Synthesegas oder Brenngas drei weitere Hauptkomponenten produzieren.

Dies ist erstens Kohlenstoff, der bei dieser Technologie aus über 90%igem reinen Kohlenstoff besteht und als weiche feinkörnige Aktivkohle vielfältigst einsetzbar ist.

In Versuchen wurden Ausbeuten von 350 Kg Kohlenstoff beim Verschwelen von einer Tonne Rapskuchen erzielt. Bei einer Tonne Altreifen lagen die Ergebnisse bei 400 Kg Kohlenstoff.

Dies ist zweitens Pyrolyseöl, verwendbar als Mittelöl oder Heizöl aber auch in wässriger Fraktion als Aromen, in Bindemitteln oder Lösungsmitteln, Harzen oder Parfüms usw. Eine Tonne Rapskuchen ergaben in der Versuchsphase 600 Liter BTL-Öl (BTL = biomass to liquid). Eine Tonne Altreifen lieferten 330 Liter Öl.

Dies ist drittens bei Altreifen als Ausgangsmaterial Federstahl, der aufgrund der Verfahrensdurchführung seine Struktur und Eigenschaften im Wesentlichen behält. Bei der Pyrolyse von einer Tonne Altreifen können um die 200 Kg Stahl anfallen.

Um optimale Ergebnisse zu erreichen, sind eine Reihe konstruktiver Maßnahmen vorgesehen, die in erster Linie sowohl den Pyrolyseofen als auch den Reaktionsbehälter betreffen.

So sieht eine vorteilhafte Ausgestaltung vor, dass die Anordnung der Innenflächen, der Isolierschichten und des eingebrachten Reaktionsbehälters zentrisch zu einander vorgesehen sind und vorzugsweise der Pyrolyseofen und der Reaktionsbehälter einen kreisförmigen Querschnitt aufweisen. Dies wirkt sich vorteilhaft auf die innere Wärmeverteilung aus.

Der Außenmantel des Pyrolyseofens wird bevorzugt aus Stahl hergestellt mit einer Manteldickte vorzugsweise < 5mm, um eine hohe Behälterstabilität zu gewährleisten.

Die auf den Innenflächen des Mantels und/oder der Decke und/oder des Bodens des Pyrolyseofens angeordneten Isolierschichten sind bevorzugt jeweils ein silicatisch gebundenes Aluminium-Eisen-Magnesiumsilicat mit Aluminium-Füllstoffen, vorzugsweise Hofalit-S^{®}. Diese können aus Einzelbausteinen aufgebaut sein und werden vorzugsweise überlappend angeordnet. Vorteilhaft an dieser Ausgestaltung ist, dass defekte Bausteine einzeln austauschbar sind. Gleichzeitig können Ausdehnungen des Materials aufgrund der Wärmeeinwirkung ausgeglichen werden, ohne dass es in der Isolierschicht zu Spannungen kommt.

Die Heizelemente werden bevorzugt im Pyrolyseofen an den oder auf den Innenflächen der Isolierschicht des Mantels und/oder auf der Isolierschicht des Bodens und/oder auf der Innenfläche der Isolierschicht der Decke angeordnet. Mittels der Steuereinheit lassen sich jeweils die Gruppe von Heizelementen auf oder an der Innenfläche der Isolierschicht des Mantels und/oder auf oder an der Innenfläche der Isolierschicht des Bodens und/oder auf oder an der Innenfläche der Isolierschicht der Decke separat ansteuern. Auch diese Maßnahme ist wesentlich für die optimale Temperatursteuerung bei der Generierung der Prozesstemperatur durch die Heizkörper. Es hat sich bei Versuchen gezeigt, dass es vorteilhaft ist, in der ersten Phase der Pyrolyse eine Beheizung des Reaktionsbehälters mittels der an der Mantelinnenfläche, auf dem Boden und an der Decke des Pyrolyseofens eingerichteten Heizelemente vorzunehmen und in der zweiten Phase der Pyrolyse vorrangig auf eine Beheizung des Reaktionsbehälters mittels der an der Mantelinnenfläche und auf dem Boden des Pyrolyseofens eingerichteten Heizelemente zurückzugreifen und die Beheizung über die Deckenfläche auszuschalten.

Ferner sieht eine vorteilhafte Ausgestaltung vor, dass zusätzlich zu einer Gasaustrittsöffnung für eine Gasabzugsleitung zentrisch im Deckel eine oder mehrere weitere Gasaustrittsöffnungen für Gasabzugsleitungen azentrisch im Deckel angeordnet sind. Die Gasabzugsleitung oder die Gasabzugsleitungen sollten in einem Neigungswinkel zur Horizontalen von + 30° bis + 60°, vorzugsweise von + 40° bis + 50°, insbesondere in einem Neigungswinkel von + 45° an die Gasaustrittsöffnung oder die Öffnungen im Deckel angeschlossen sein. Diese Maßnahmen wirken sich vorteilhaft auf die Ausbildung eines Strömungsprofils im Kopfraum des Reaktionsbehälters aus, welches die Abscheidung von Feinruß begünstigt und verstärkt.

Von Bedeutung ist in diesem Zusammenhang auch die Ausgestaltung des im Deckel des Reaktionsbehälters angeordneten Siebbehälters, der die Gasaustrittsöffnung umschließt und der mit seinen Außenkanten mit der Innenfläche des Deckels abschließt. Dieser Siebkörper wird bevorzugt als nach oben offener Zylinder, oder als gewölbter Körper, vorzugsweise als Kugelausschnitt oder Kegelstumpf ausgebildet und zentrisch zur Mitte des Deckels ausgerichtet angeordnet.
In seinem unteren, in den Reaktionsbehälter gerichteten Bereich ist er geschlossen ausgeführt, vorzugsweise in Form eines ebenen Prallbleches für im Gas enthaltenen Schwebstoffe. Insbesondere werden noch nicht vollständig pyrolysierte Partikel wieder in den Reaktionsraum zurückgeschleudert, um dort fortschreitend umgesetzt zu werden.

Die Vorrichtung zum Abtrennen von Feinruß wird bevorzugt als kreisförmiges Lochblech ausgebildet, auf dem senkrecht nach oben weisende Lochbleche aus mit Abstand zueinander zentrisch und ineinander gesteckten gelochten Rohrstücken angeordnet sind. Dieses Lochblech bedingt eine Verwirbelung des Pyrolysgases sowie der darin enthaltenen Partikel. Gleichzeitig werden aufgrund der Strömungsbedingungen am Lochblech bzw. bei Durchströmen der Löcher im Lochblech Zonen unterschiedlicher Strömungsgeschwindigkeit bzw. Bereiche mit hoher Scherrate ausgebildet, in denen einerseits eine Zerkleinerung größerer Konglomerate von Rußteilchen erfolgt, anderseits Zonen vorhanden sind, welche ein Absetzen von Feinrußpartikeln aufgrund von geringen Strömungsgeschwindigkeiten begünstigt.

Da die Anlage alternativ sowohl zum Verschwelen von Altreifen im Ganzen als auch von Biomasse im Form von Pellets oder Kuchen geeignet sein soll, sieht eine vorteilhafte Ausgestaltung insbesondere für die Verwendung von feuchter Biomasse vor, dass im Reaktionsbehälter ein Einsatz angeordnet werden kann, der den Reaktionsbehälter in von unten nach oben verlaufende Aufnahmezellen für das zu verschwelende Reaktionsgut unterteilt.

Ein solcher Einsatz läßt sich aus sich in einer Längsachse, die in Längsachse des Reaktionsbehälters verläuft, kreuzenden Flächenkörpern, vorzugsweise Blechen, bilden.
Die Wände des Einsatzes weisen vorteilhafterweise senkrecht verlaufende Öffnungen, insbesondere Schlitze auf, wobei die im Bodenbereich befindlichen einseitig offen sind.
Auf diese Weise wird in der Anfangsphase der Pyrolyse ein optimaler Feuchteaustausch und damit eine entsprechend gleichmäßig Feuchtereduzierung des Verschwelgutes erreicht.

Der Einsatz führt dazu, dass das in der Anfangsphase der Pyrolyse aus der feuchten Biomasse verdampfte Wasser an den Flächen des Einsatzes kondensiert, zum Boden des Reaktionsgefäßes abläuft und sich dort sammelt. Die Schlitze am Boden der Bleche erlauben eine gleichmäßige Verteilung des kondensierten Wassers am Boden des Reaktionsbehälters.

Dort erfolgt, unterstützt durch die Bodenbeheizung des Reaktionsgefäßes, eine erneute Verdampfung des Wassers. Das Verschwelgut kann aufgrund dieses Einsatzes einerseits entfeuchtet, gleichzeitig aber gleichmäßig wieder befeuchtet werden, bis das Wasser komplett aus dem Verschwelgut ausgetrieben und verdampft wurde. Bei der Pyrolyse wird Wasser zu Wasserstoff umgesetzt, welches dann mit den verkohlten Produkten zu höherwertigen Kohlenwasserstoffverbindungen reagiert. Aufgrund der gleichmäßigen Verteilung bzw. Bildung von H₂ im Reaktionsraum wird somit eine gleichmäßige Bildung von Kohlenwasserstoffen ermöglicht.

Anhand von Ausführungsbeispielen soll die Anlage erläutert werden. Es zeigen:
- Fig. 1: eine Gesamtansicht,
- Fig. 2: einen Schnitt durch den leeren Pyrolyseofen,
- Fig. 3: eine Ansicht des Siebkörpers,
- Fig. 4: eine Vorrichtung zum Abtrennen von Feinruß und
- Fig. 5: einen Einsatz.

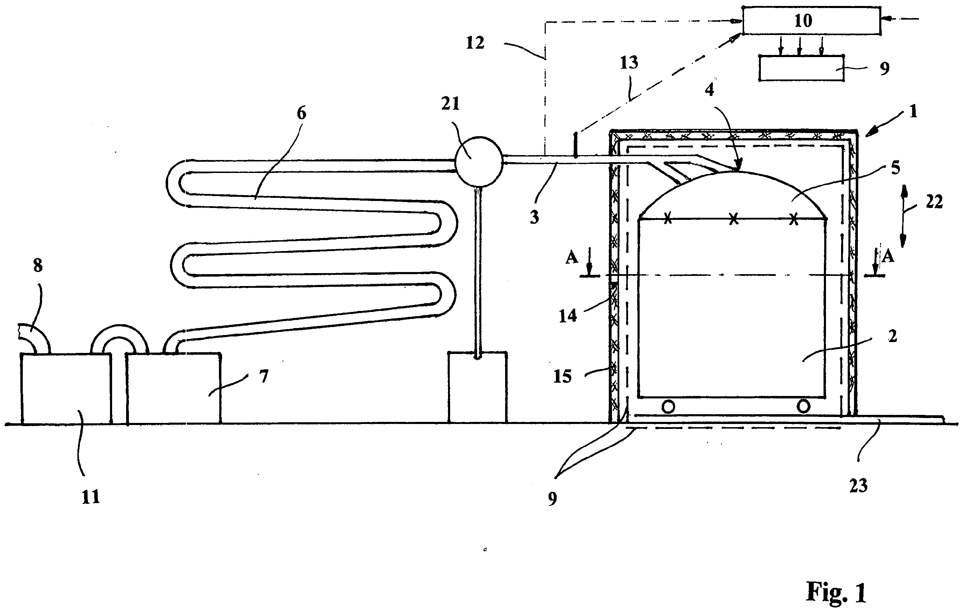

**Fig. 1** zeigt schematisch den Gesamtaufbau der Pyrolyseanlage zur Durchführung einer Mitteltemperaturpyrolyse mit einem zylinderförmigen Pyrolyseofen 1, der einen Stahlmantel von 2-5 mm aufweist und dessen Innenflächen 14 mit einer Isolierschicht 15 aus einem anorganischen Wärmedämmstoff versehen sind, wobei auf oder an den Innenflächen 14 der Isolierschichten 15 Heizelemente 9 angeordnet sind.

Dabei bilden die im Pyrolyseofen 1 an den oder auf den Innenflächen der Isolierschicht 15.1 des Mantels und/oder auf der Isolierschicht 15.2 des Bodens und/oder auf der Innenfläche der Isolierschicht 15.3 der Decke angeordneten Heizkörper 9 jeweils Gruppen, die durch die Steuereinrichtung 10 jeweils separat ansteuerbar sind.

In den Pyrolyseofen 1 ist über Führungsschienen 23 der Reaktionsbehälter 2 zylinderförmiger Form einfahrbar, der oben offen und mit einem Deckel 5 in Form eines gewölbten Bodens, vorzugsweise eines Klöpperbodens, verschließbar ist, wobei der Deckel 5 zwei mit einer Gasabzugsleitung 3 aus dem Pyrolyseofen 1 verbindbare Gasaustrittsöffnungen 4 aufweist. Der Pyrolyseofen 1 ist durch eine Hubtür 22 verschließbar.

Mit der Gasabzugshauptleitung 3 verbunden ist eine Kühlschlange 6 zum Kondensieren des Pyrolyseöles, das in einem Pyrolyseölauffangbehälter 7 gesammelt wird. Das verbleibende Gas wird über einen Gasfilter in einem Gassammler 8 zugeleitet.

Vor der Kühlschlage 6 ist ein Feststoffpartikel und/oder ein Kondenswasserabscheider 21 angeordnet.

Ferner wird die Steuereinheit 10 zur Steuerung und Regelung der Heizelemente 9 gezeigt, wobei die Steuereinheit 10 mit Mittel 12 zur Detektion der Pyrolysegasentwicklung und mindestens einem Temperatursensor 13 zur Bestimmung der Pyrolysegastemperatur gekoppelt ist, derart, dass in Abhängigkeit von der detektierten Pyrolysegasentwicklung und /oder vorgegebener Pyrolysegastemperaturen und/oder einer vorgegebenen Zeit eine stufenweise Reduzierung der Aufheizleistung von Heizelementen 9 bis hin zum Ausschalten aller Heizelemente 9 steuer- oder regelbar ist.

Das Mittel 12 zur Detektion der Pyrolysegasentwicklung ist bevorzugt ein Sensor zur Bestimmung der Brennbarkeit und/oder Zündfähigkeit des Pyrolysegases.

Der Temperatursensor 13 ist im Bereich außerhalb des Pyrolyseofens 1 und vor dem Kondenswasserabscheider 21 oder der Kühlschlange 6 angeordnet.

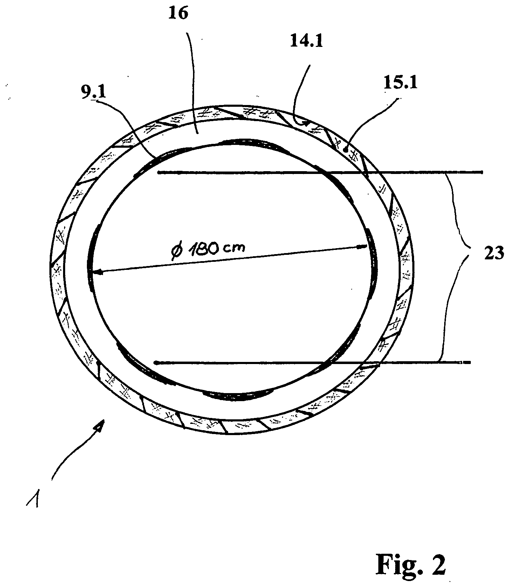

**Fig. 2** zeigt in einem Schnitt durch den leeren Pyrolyseofen 1 die Anordnung der Isolierschicht 15 und der Heizkörper 9.

Die auf den Innenflächen 14.1 des Mantels, 14.2 des Bodens und 14.3 der Decke angeordneten Isolierschichten 15 sind jeweils ein silicatisch gebundenes Aluminium-Eisen-Magnesiumsilicat mit Aluminium-Füllstoffen, vorzugsweise Hofalit-S^{®}.

Mindestens eine der Isolierschichten 15.1, 15.2, 15.3 ist aus Einzelbausteinen aufgebaut, wobei diese vorzugsweise überlappend angeordnet sind, wie in der Fig. 2 bei der Isolierschicht 15.1 des Zylindermantels gezeigt ist.

Ferner ist erkennbar, dass die Heizelemente 9.1 an oder auf der Isolierschicht 15.1 des Mantels an hier angeordneten Spannringen 16 befestigt sind.

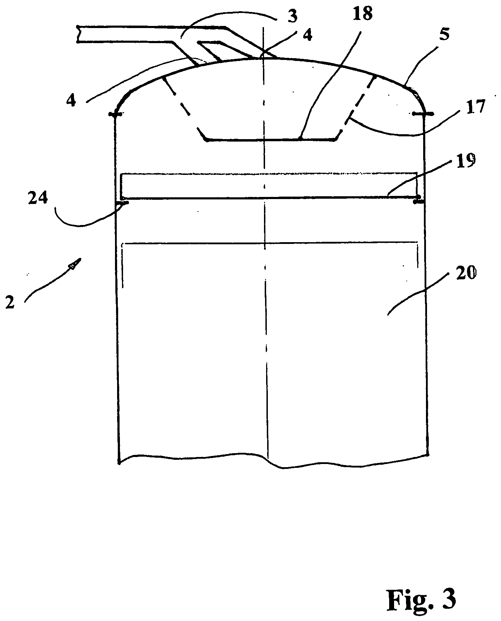

**Fig. 3** zeigt den oberen Teil des Reaktionsbehälters 2 mit dem Deckel 5 als Klöpperboden ausgebildet. Der Deckel 5 weist zwei Gasaustrittsöffnungen 4 auf, deren Gasabzugsleitungen 3 in einem Neigungswinkel zur Horizontalen von + 30° bis + 60°, vorzugsweise von + 40° bis + 50°, insbesondere in einem Neigungswinkel von + 45° an die Gasaustrittsöffnung 4 am Deckel 5 angeschlossen sind.

Eine Gasaustrittsöffnung 4 für eine Gasabzugsleitung 3 ist zentrisch im Deckel 5 angeordnet, während die zweite weitere Gasaustrittsöffnung 4 für eine weitere Gasabzugsleitung 3 azentrisch im Deckel 5 angeordnet ist.

Im Deckel 5 ist ein die Gasaustrittsöffnung 4 umschließender Siebkörper 17 angeordnet, der mit seinen Außenkanten mit der Innenfläche des Deckels 5 abschließt.

Der Siebkörper 17 ist als nach oben offener Zylinder, oder als gewölbter Körper, vorzugsweise als Kugelausschnitt oder Kegelstumpf ausgebildet und zentrisch zur Mitte des Deckels 5 ausgerichtet angeordnet. In seinem unteren, in den Reaktionsbehälter 2 gerichteten Bereich ist er geschlossen ausgeführt, vorzugsweise in Form eines ebenen Prallbleches 18.

Unterhalb des Siebkörpers 17 ist im Reaktionsbehälter 2 die Vorrichtung 19 zum Abtrennen von Feinruß angeordnet und darunter im Bedarfsfall bei Verschwelung von Biomasse ein Einsatz 20.
Die Vorrichtung 19 stützt sich auf Halterungen 24 an der Innenwand des Reaktionsbehälters 2 ab.

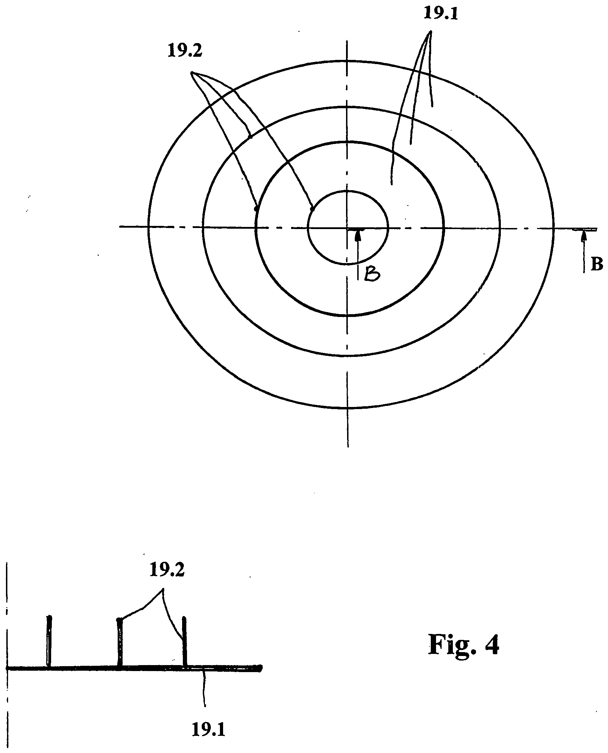

Wie in **Fig. 4** dargestellt, ist die Vorrichtung 19 zum Abtrennen von Feinruß als kreisförmiges Lochblech 19.1 ausgebildet, auf dem senkrecht nach oben weisende Lochbleche aus mit Abstand zueinander zentrisch und ineinander gesteckten mit Abstand zueinander zentrisch und ineinander gesteckten gelochten Rohrstücken 19.2 angeordnet sind. Der Feinruß sammelt sich in so gebildeten Ringzellen, und kann nach dem Öffnen des Deckels 5 mit der gesamten Vorrichtung 19 aus dem Reaktionsbehältnis 2 herauskommen und dann abgetrennt werden.

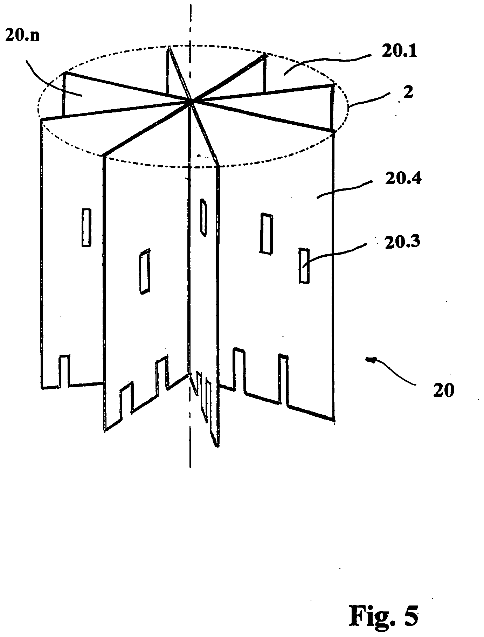

Der in **Fig. 5** dargestellte Einsatz 20 findet Verwendung bei der Verschwelung von Pellets oder Kuchen aus Biomasse.
Der Einsatz 20 unterteilt den Reaktionsbehälter 2 in von unten nach oben verlaufende Aufnahmezellen 20.1-n für das zu verschwelende Reaktionsgut, vorzugsweise in Aufnahmezellen gleicher Größe.

Die Wände 20.2 des Einsatzes 20 weisen senkrecht verlaufende Öffnungen, vorzugsweise Schlitze 20.3 auf, wobei die Schlitze im Bodenbereich einseitig offen sind.

Wie dargestellt wird der Einsatz 20 bevorzugt aus sich in einer Längsachse, die in Längsachse des Reaktionsbehälters 2 verläuft, kreuzenden Flächenkörpern 20.4, vorzugsweise Blechen, gebildet.

Bei der vorgeschlagenen Vorrichtung und dem Verfahren zum Pyrolysieren von kohlenwasserstoffhaltigen Ausgangsmaterialien insbesondere von Altreifen, Bio-Abfall, Holz, Gummi und Rückständen der Rapsölproduktion, wird das zu pyrolysierende Material möglichst ganzstückig in den Reaktionsbehälter eingebracht und im Niedrigtemperaturbereich pyrolysiert.

Ein wesentlicher Vorteil besteht darin, dass mehrere, unterschiedliche Materialien bereitgestellt werden könnten, so dass die Pyrolyseanlage in relativ schnellem Wechsel für unterschiedliche Pyrolyserohstoffe verwendbar ist, ohne Änderungsvorkehrungen am Ofen.

Dieses Verfahren ist äußerst einfach im Aufbau und in der Handhabung und gewährleistet auch eine ständig gleich bleibende Qualität des produzierten Kohlenstoffs, wie Versuche in Pilotanlagen gezeigt haben.

Angesichts von Messungen an Altreifen, Gummi oder Rapskuchen, die im Jahr allein in Deutschland eine Größenordnung von 700.000 Tonnen Altreifen und 4 Mio. Tonnen Rapsschrott/-kuchen erreichen und ständig steigen, hat die erfindungsgemäße Technologie eine große Perspektive.

Wie bereits geschildert wurde, werden aus den Ausgangsprodukten nicht in erster Linie Zuschlagsstoffe gewonnen, sondern mit reinem Kohlenstoff, Pyrolyseöl, Stahl und Gas vielfältig benötigte Ausgangsprodukte für die Industrie.

In der Energiebilanz eines Pyrolyseofens für 750 kg Altreifen steht einer Energieerzeugung (Pyrolysegas und Pyrolyseöl) von rd. 3.500 kwh ein Verfahrensenergieverbrauch von 500 kwh gegenüber.

Bei einem Fassungsvermögen von 1.000 kg Rapskuchen beläuft sich die Energieerzeugung auf rd. 7.000 kwh der ein Verbrauch von 500 kwh gegenübersteht.

### Bezugszeichenliste

- 1: Pyrolyseofen
- 2: Reaktionsbehälter
- 3: Gasabzugsleitung
- 4: Gasaustrittsöffnung
- 5: Deckel in Form eines gewölbten Boden, vorzugsweise Klöpperboden
- 6: Kühlschlange
- 7: Pyrolyseölauffangbehälter
- 8: Gassammler
- 9: Heizelemente
- 9.1: Mantel
- 9.2: Boden
- 9.3: Deckel
- 10: Steuereinheit
- 11: Gasfilter
- 12: Mittel zur Detektion der Pyrolysegasentwicklung
- 13: Temperatursensor
- 14: Innenflächen
- 14.1: Innenflächen des Mantels
- 14.2: Innenflächen des Bodens
- 14.3: Innenflächen des Deckels
- 15: Isolierschicht
- 15.1: Isolierschicht Mantel
- 15.2: Isolierschicht Boden
- 15.3: Isolierschicht Decke
- 16: Spannringe
- 17: Siebkörper
- 18: Prallblech
- 19: Vorrichtung zum Abtrennen von Feinruß
- 19.1: Lochblech
- 19.2: Lochblech (Rohrstücke)
- 20: Einsatz
- 20.1-n: Aufnahmezellen
- 20.2: Wände
- 20.3: Schlitze
- 20.4: Flächenkörper
- 21: Kondenswasserabschneider
- 22: Hubtür
- 23: Führungsschienen
- 24: Halterungen

## Patentansprüche

1. Vorrichtung zur Durchführung einer
Mitteltemperaturpyrolyse mit einem zylinderförmigen Pyrolyseofen (1), dessen Innenflächen (14) mit einer Isolierschicht (15) aus einem anorganischen Wärmedämmstoff versehen sind, wobei auf oder an den Innenflächen (14) der Isolierschichten (15) Heizelemente (9) angeordnet sind,
mit einem in den Pyrolyseofen (1) einbringbaren Reaktionsbehälter (2) zylinderförmiger Form, der oben offen und mit einem Deckel (5) in Form eines gewölbten Bodens, verschließbar ist, wobei der Deckel (5) mindestens eine mit einer Gasabzugsleitung (3) aus dem Pyrolyseofen (1) verbindbare Gasaustrittsöffnung (4) aufweist und im Deckel (5) ein die Gasaustrittsöffnung (4) umschließender Siebkörper (17) angeordnet ist, der mit seinen Außenkanten mit der Innenfläche des Deckels (5) abschließt,
im Reaktionsbehälter (2) oberhalb des zu verschwelenden Gutes weiter eine Vorrichtung (19) zum Abtrennen von hochreinem Feinruß angeordnet ist, die aus einem Lochblech (19.1) besteht, das seitlich an der Reaktionsbehälterwand abgestützt ist und auf dem senkrecht und nach oben weisende Lochbleche (19.2) angeordnet sind,
mit mindestens einer mit der Gasabzugsleitung (3) verbundenen Kühlschlange (6) zum Kondensieren des Pyrolyseöles,
mit mindestens einem Pyrolyseölauffangbehälter (7) und mit einem Gassammler (8) für das verbleibende Gas, sowie
mit einer Steuereinheit (10) zur Steuerung und Regelung der Heizelemente (9), wobei die Steuereinheit (10) mit Mittel (12) zur Detektion der Pyrolysegasentwicklung und mindestens einem Temperatursensor (13) zur Bestimmung der Pyrolysegastemperatur gekoppelt ist, derart, dass in Abhängigkeit von der detektierten Pyrolysegasentwicklung und /oder vorgegebener Pyrolysegastemperaturen und/oder einer vorgegebenen Zeit eine stufenweise Reduzierung der Aufheizleistung von Heizelementen (9) bis hin zum Ausschalten aller Heizelemente (9) steuer- oder regelbar ist.

2. Vorrichtung nach Anspruch 1 oder 2, **dadurch gekennzeichnet, dass**
der Außenmantel des Pyrolyseofens (1) aus Stahl hergestellt ist mit einer Manteldicke vorzugsweise < 5mm und die auf den Innenflächen(14) angeordneten Isolierschichten (15) jeweils ein silicatisch gebundenes Aluminium-Eisen-Magnesiumsilicat mit Aluminium-Füllstoffen sind.

3. Vorrichtung nach Anspruch 1 oder 2, **dadurch gekennzeichnet, dass**
mindestens eine der Isolierschichten (15.1, 15.2, 15.3) aus Einzelbausteinen aufgebaut ist und diese vorzugsweise überlappend angeordnet sind.

4. Vorrichtung nach einem der Ansprüche 1 bis 3, **dadurch gekennzeichnet, dass**
im Pyrolyseofen (1) an den oder auf den Innenflächen der Isolierschicht (15.1) des Mantels und/oder auf der Isolierschicht (15.2) des Bodens und/oder auf der Innenfläche der Isolierschicht (15.3) der Decke Heizelemente (9) angeordnet sind, wobei die Heizelemente (9.1) an oder auf der Isolierschicht (15.1) des Mantels an hier angeordneten Spannringen (16) befestigt sind.

5. Vorrichtung nach einem der Ansprüche 1 bis 4, **dadurch gekennzeichnet, dass**
die Gruppe von Heizelementen (9) auf oder an der Innenfläche der Isolierschicht (15.1) des Mantels und/oder auf oder an der Innenfläche der Isolierschicht (15.2) des Bodens und/oder auf oder an der Innenfläche der Isolierschicht (15.3) der Decke mittels der Steuereinheit (10) jeweils separat ansteuerbar ist.

6. Vorrichtung nach einem der Ansprüche 1 bis 5, **dadurch gekennzeichnet, dass**
eine Gasaustrittsöffnung (4) für eine Gasabzugsleitung (3) zentrisch im Deckel (5) und zusätzlich eine oder mehrere weitere Gasaustrittsöffnungen (4) für Gasabzugsleitungen (3) azentrisch im Deckel (5) angeordnet sind.

7. Vorrichtung nach Anspruch 6, **dadurch gekennzeichnet, dass**
die Gasabzugsleitung oder die Gasabzugsleitungen (3) in einem Neigungswinkel zur Horizontalen von + 30° bis + 60°, vorzugsweise von + 40° bis + 50°, insbesondere in einem Neigungswinkel von + 45° an die Gasaustrittsöffnung (4) oder die Öffnungen im Deckel (5) angeschlossen sind und in eine Gasabzugshauptleitung einmünden.

8. Vorrichtung nach einem der Ansprüche 1 bis 7, **dadurch gekennzeichnet, dass**
der Siebkörper (17) als nach oben offener Zylinder, oder als gewölbter Körper, vorzugsweise als Kugelausschnitt oder Kegelstumpf ausgebildet und zentrisch zur Mitte des Deckels (5) ausgerichtet ist.

9. Vorrichtung nach einem der Ansprüche 1 bis 8, **dadurch gekennzeichnet, dass**
der Siebkörper (17) in seinem unteren, in den Reaktionsbehälter (2) gerichteten Bereich geschlossen ausgeführt ist, vorzugsweise in Form eines ebenen Prallbleches (18).

10. Vorrichtung nach einem der Ansprüche 1 bis 9, **dadurch gekennzeichnet, dass**
im Reaktionsbehälter (2) ein Einsatz (20) angeordnet ist, der den Reaktionsbehälter (2) in von unten nach oben verlaufende Aufnahmezellen (20.1-n) für das zu verschwelende Reaktionsgut unterteilt, wobei die Wände (20.2) des Einsatzes (20) senkrecht verlaufende Öffnungen, vorzugsweise Schlitze (20.3) aufweisen, wobei die im Bodenbereich einseitig offen sind.

11. Vorrichtung nach einem der Ansprüche 1 bis 10, **dadurch gekennzeichnet, dass**
das Mittel (12) zur Detektion der Pyrolysegasentwicklung ein Sensor zur Bestimmung der Brennbarkeit und/oder Zündfähigkeit des Pyrolysegases ist.

12. Vorrichtung nach einem der Ansprüche 1 bis 11, **dadurch gekennzeichnet, dass**
mindestens ein Temperatursensor (13) im Bereich außerhalb des Pyrolyseofens (1) und vor dem Kondenswasserabscheider (21) oder der Kühlschlange (6) angeordnet ist.

13. Verfahren zum Betrieb einer Vorrichtung nach einem der Ansprüche 1 bis 12,
wobei nach Beladen des Pyrolyseofens mit einem mit verschwelbaren Gut gefüllten Reaktionsbehälter in einer ersten Phase der Pyrolyse einzelnen oder alle Heizelemente des Pyrolyseofens auf eine vorgegebene erste Heiztemperatur aufgeheizt werden,
wobei mittels eines Mittels zur Detektion der Pyrolysegasentwicklung eine Pyrolysegasentwicklung detektiert wird,
wobei mittels der Steuereinheit bei Detektion einer Pyrolysegasentwicklung die Heizelemente angesteuert werden nach Maßgabe der Einregelung auf eine einer zweiten Phase der Pyrolyse vorgegebenen zweiten Heiztemperatur, die unterhalb der ersten Heiztemperatur liegt, und/oder nach Maßgabe der Einstellung einzelner Gruppen von Heizelementen auf den Betriebszustand "aus",
wobei mittels eines Temperatursensors eine vorgegebene Pyrolysegastemperatur detektiert wird,
wobei mittels der Steuereinheit auf Detektion einer vorgegebenen Pyrolysegastemperatur die Heizelemente angesteuert werden nach Maßgabe der Einstellung aller Heizelemente auf den Betriebszustandes "aus".

14. Verfahren nach Anspruch 13, **dadurch gekennzeichnet, dass**
in der ersten Phase der Pyrolyse die durch die Heizelemente generierbare erste Heiztemperatur zwischen 650°C und 820°C liegt.

15. Verfahren nach Anspruch 13 oder 14, **dadurch gekennzeichnet, dass**
in der zweiten Phase der Pyrolyse die durch Heizelemente generierbare zweite Heiztemperatur zwischen 450°C und 520°C liegt.

16. Verfahren nach einem der Ansprüche 13 bis 15, **dadurch gekennzeichnet, dass**
die mittels eines Temperatursensors bestimmbare vorgegebene Pyrolysegastemperatur eine Temperatur unterhalb 140°C, vorzugsweise eine Temperatur zwischen 100°C und 110°C, ist.

17. Verfahren nach einem der Ansprüche 13 bis 16, **dadurch gekennzeichnet, dass**
in der ersten Phase der Pyrolyse eine Beheizung des Reaktionsbehälters mittels der an der Mantelinnenfläche, auf dem Boden und an der Decke des Pyrolyseofens eingerichteten Heizelemente erfolgt.

18. Verfahren nach einem der Ansprüche 13 bis 17, **dadurch gekennzeichnet, dass**
in der zweiten Phase der Pyrolyse eine Beheizung des Reaktionsbehälters mittels der an der Mantelinnenfläche und auf dem Boden des Pyrolyseofens eingerichteten Heizelemente erfolgt.

## Claims

1. A device for implementing medium-temperature pyrolysis with a cylindrical pyrolysis furnace (1), the inner surfaces (14) of which are equipped with an insulating layer (15) made from an anorganic thermal insulation material, wherein heating elements (9) are arranged on top of or on the inner surfaces (14) of the insulating layers (15),
with a reaction container (2) with a cylindrical form that is insertable into the pyrolysis furnace (1), which is open at the top and closable with a lid (5) in the form of a curved base, wherein the lid (5) features at least one gas outlet opening (4) that is connectable to a gas discharge line (3) out of the pyrolysis furnace (1), and in the lid (5), a strainer body (17) is arranged which encloses the gas outlet opening (4), which with its outer edges creates a closure with the inner surface of the lid (5),
in the reaction container (2) above the product to be carbonised, a device (19) for separating pure fine carbon black is further arranged, which consists of a perforated metal sheet (19.1) which is supported on the side on the reaction container wall, and on which perforated metals sheets (19.2) are arranged which point vertically and upwards,
with at least one cooling coil (6) connected to the gas discharge line (3) for evaporating the pyrolysis oil, with at least one pyrolysis catchment container (7) and with a gas collector (8) for the remaining gas, and
with a control unit (10) for controlling and regulating the heating elements (9), wherein the control unit (10) is coupled with means (12) for detecting the pyrolysis gas development and at least one temperature sensor (13) for determining the pyrolysis gas temperature, in such a manner that depending on the detected pyrolysis gas development and/or specified pyrolysis gas temperatures and/or a specified time, a step-by-step reduction of the heating capacity of heating elements (9) through to the shutdown of all heating elements (9) can be controlled or regulated.

2. The device according to Claim 1 or 2,
**characterized in that** the outer sheath of the pyrolysis furnace (1) is made of steel, with a sheath thickness preferably < 5 mm, and the insulating layers (15) arranged on the inner surfaces (14) are respectively a siliceous-bound aluminium-iron magnesium silicate with aluminium filler substances.

3. The device according to Claim 1 or 2,
**characterized in that** at least one of the insulating layers (15.1, 15.2, 15.3) is constructed of individual modules, and these are preferably arranged such that they overlap.

4. The device according to any one of Claim 1 to 3,
**characterized in that** in the pyrolysis furnace (1) on or on top of the inner surfaces of the insulating layer (15.1) of the material, and/or on the insulating layer (15.2) of the base, and/or on the inner surface of the insulating layer (15.3) of the ceiling, heating elements (9) are arranged, wherein the heating elements (9.1) are affixed on or on top of the insulating layer (15.1) of the sheath on tension rings (16) arranged here.

5. The device according to any one of Claims 1 to 4,
**characterized in that** the group of heating elements (9) on top of or on the inner surface of the insulating layer (15.1) of the sheath and/or on top of or on the inner surface of the insulating layer (15.2) of the base, and/or on top of or on the inner surface of the insulating layer (15.3) of the ceiling can respectively be triggered separately by means of the control unit (10).

6. The device according to any one of Claims 1 to 5,
**characterized in that** a gas outlet opening (4) for a gas discharge line (3) is arranged centrally in the lid (5), and in addition, one or more additional gas outlet openings (4) for gas discharge lines (3) are arranged acentrally in the lid (5).

7. The device according to Claims 6,
**characterized in that** the gas discharge line or gas discharge lines (3) are connected at an angle of inclination to the horizontal of +30° to +60°, preferably from +40° to +50°, in particular at an angle of inclination of +45° to the gas outlet opening (4) or the openings in the lid (5), and open out into a main gas discharge line.

8. The device according to any one of Claims 1 to 7,
**characterized in that** the strainer body (17) is designed as a cylinder that is open at the top or as a curved body, preferably as a sphere section or cone stump, and is aligned centrally to the centre of the lid (5).

9. The device according to any one of Claims 1 to 8,
**characterized in that** the strainer body (17) is closed in its lower area that points into the reaction container (2), preferably in the form of an open baffle plate (18).

10. The device according to any one of Claims 1 to 9,
**characterized in that** in the reaction container (2) an insert (20) is arranged, which divides the reaction container (2) into retention cells (20.1-n) for the reaction product to be carbonised, wherein the walls (29.1) of the insert (20) feature vertically running openings, preferably slits (20.3), wherein those in the base area are open to one side.

11. The device according to any one of Claims 1 to 10,
**characterized in that** the means (12) for detecting the pyrolysis gas development is a sensor for determining the flammability and/or ignitability of the pyrolysis gas.

12. The device according to any one of Claims 1 to 11,
**characterized in that** at least one temperature sensor (13) is arranged in the area outside of the pyrolysis furnace (1) and in front of the condensate separator (21) or cooling coil (6).

13. A method for operating a device according to any one of Claims 1 to 12,
wherein following loading of the pyrolysis furnace with a reaction container filled with product to be carbonised, in a first phase of pyrolysis, individual or all heating elements of the pyrolysis furnace are heated to a specified initial heating temperature,
wherein using a means for detecting the pyrolysis gas development, pyrolysis gas development is detected,
wherein by means of the control unit, the heating elements are triggered when pyrolysis gas development is detected with reference to the adjustment to a second heating temperature specified for a second phase of pyrolysis which is lower than the initial heating temperature, and/or with reference to the setting of individual groups of heating elements, to the "off" operating state, wherein by means of a temperature sensor, a specified pyrolysis gas temperature is detected,
wherein by means of the control unit, when a specified pyrolysis gas temperature is detected, the heating elements are triggered to the "off" operating state with reference to the setting of all heating elements.

14. The method according to Claim 13,
**characterized in that** in the first phase of pyrolysis, the initial heating temperature that can be generated by the heating elements lies between 650°C and 820°C.

15. The method according to Claim 13 or 14,
**characterized in that** in the second phase of pyrolysis, the second heating temperature that can be generated by the heating elements lies between 450°C and 520°C.

16. The method according to any one of Claims 13 to 15,
**characterized in that** the specified pyrolysis gas temperature that can be generated by means of a temperature sensor is below 140°C, preferably a temperature between 100°C and 110°C.

17. The method according to any one of Claims 13 to 16,
**characterized in that** in the first phase of pyrolysis, the reaction container is heated using the heating elements installed on the inner sheath surface, on the base and on the ceiling of the pyrolysis furnace.

18. The method according to any one of Claims 13 to 17,
**characterized in that** in the second phase of pyrolysis, the reaction container is heated using the heating elements installed on the inner sheath surface, on the base and on the ceiling of the pyrolysis furnace.

## Revendications

1. Dispositif pour l'exécution d'une pyrolyse à température moyenne avec un four à pyrolyse cylindrique (1), dont les surfaces intérieures (14) sont pourvues d'une couche isolante (15) en matériau thermo-isolant inorganique, des éléments chauffants (9) étant disposés sur ou contre les surfaces intérieures (14) des couches isolantes (15),
avec une cuve de réaction (2) de forme cylindrique pouvant être mise en place dans le four à pyrolyse (1), ouvert sur le haut, et pouvant être obturée par un couvercle (5) ayant la forme d'un fond voûté, ledit couvercle (5) présentant au moins une ouverture d'échappement de gaz (4) pouvant être reliée à une conduite d'extraction de gaz (3) sortant du four à pyrolyse (1) et un corps de tamis (17) entourant l'ouverture d'échappement de gaz (4) étant disposé dans le couvercle (5) et contactant la surface intérieure du couvercle (5) par ses bords extérieurs,
un dispositif (19) pour la séparation de noir de carbone hautement purifié étant monté au-dessus du matériau à carboniser dans la cuve de réaction (2), lequel consiste en une tôle perforée (19.1) s'appuyant latéralement contre la paroi de la cuve de réaction, sur laquelle sont perpendiculairement disposées des tôles perforées (19.2) verticales,
avec au moins un serpentin de refroidissement (6) pour la condensation de l'huile pyrolytique, raccordé à la conduite d'extraction de gaz (3),
avec au moins une cuve de collecte de l'huile pyrolytique (7) et avec un collecteur de gaz (8) pour le gaz restant, et
avec une unité de commande (10) pour la commande et la régulation des éléments chauffants (9), ladite unité de commande (10) étant accouplée à des moyens (12) de détection d'émission de gaz de pyrolyse et à au moins un capteur de température (13) pour la détection de la température de gaz de pyrolyse, de sorte qu'en fonction de l'émission de gaz de pyrolyse détectée et /ou des températures de gaz de pyrolyse prescrites et/ou d'un temps prescrit, une diminution graduelle de la puissance de chauffage des éléments chauffants (9) peut être commandée ou régulée jusqu'à de désactivation de tous les éléments chauffants (9).

2. Dispositif selon la revendication 1 ou la revendication 2, **caractérisé**
**en ce que** l'enveloppe extérieure du four à pyrolyse (1) est fabriquée en acier, avec une épaisseur d'enveloppe préférentiellement < 5mm, et **en ce que** les couches isolantes (15) disposées sur les surfaces intérieures (14) sont chacune en silicate de magnésium-fer-aluminium à liaison silicate, avec des matières de charge en aluminium.

3. Dispositif selon la revendication 1 ou la revendication 2, **caractérisé**
**en ce qu'**au moins une des couches isolantes (15.1, 15.2, 15.3) est constituée d'éléments individuels, et **en ce que** ceux-ci sont préférentiellement disposés en chevauchement.

4. Dispositif selon l'une quelconque des revendications 1 à 3, **caractérisé**
**en ce que** des éléments chauffants (9) sont disposés dans le four à pyrolyse (1) sur ou contre les surfaces intérieures de la couche isolante (15.1) de l'enveloppe et/ou sur la couche isolante (15.2) du fond et/ou sur la surface intérieure de la couche isolante (15.3) du dessus, lesdits éléments chauffants (9.1) étant fixés contre ou sur la couche isolante (15.1) de l'enveloppe, sur des bagues de serrage (16) qui y sont disposées.

5. Dispositif selon l'une quelconque des revendications 1 à 4, **caractérisé**
**en ce que** le groupe d'éléments chauffants (9) permet une commande séparée de chaque élément sur ou contre la surface intérieure de la couche isolante (15.1) de l'enveloppe et/ou sur ou contre la surface intérieure de la couche isolante (15.2) des fond et/ou sur ou contre la surface intérieure de la couche isolante (15.3) du dessus au moyen de l'unité de commande (10).

6. Dispositif selon l'une quelconque des revendications 1 à 5, **caractérisé**
**en ce qu'**une ouverture d'échappement de gaz (4) est présentée au centre du couvercle (5) pour une conduite d'extraction de gaz (3) et **en ce qu'**une ou plusieurs autres ouvertures d'échappement de gaz (4) sont en outre présentées de manière excentrée dans le couvercle (5) pour des conduites d'extraction de gaz (3).

7. Dispositif selon la revendication 6, **caractérisé**
**en ce que** la conduite d'extraction de gaz ou les conduites d'extraction de gaz (3) sont raccordées à l'ouverture d'échappement de gaz (4) ou aux ouvertures dans le couvercle (5) suivant un angle d'inclinaison compris entre + 30° et + 60° par rapport à l'horizontale, préférentiellement entre + 40° et + 50°, tout particulièrement suivant un angle d'inclinaison de + 45°, et débouchent dans une conduite principale d'extraction de gaz.

8. Dispositif selon l'une quelconque des revendications 1 à 7, **caractérisé**
**en ce que** le corps de tamis (17) est réalisé comme cylindre ouvert sur le haut, ou comme corps voûté, préférentiellement comme section sphérique ou cône tronqué, et est centré par rapport au milieu du couvercle (5).

9. Dispositif selon l'une quelconque des revendications 1 à 8, **caractérisé**
**en ce que** le corps de tamis (17) est fermé dans sa partie inférieure dirigée vers la cuve de réaction (2), en ayant préférentiellement la forme d'un déflecteur plan (18).

10. Dispositif selon l'une quelconque des revendications 1 à 9, **caractérisé**
**en ce qu'**une garniture (20) est disposée dans la cuve de réaction (2), laquelle divise la cuve de réaction (2) en cellules de réception (20.1-n) s'étendant du bas vers le haut pour la matière de réaction à carboniser, les parois (20.2) de la garniture (20) présentant des ouvertures à extension verticale, préférentiellement des fentes (20.3), celles-ci étant ouvertes sur un côté dans la zone de fond.

11. Dispositif selon l'une quelconque des revendications 1 à 10, **caractérisé**
**en ce que** le moyen (12) de détection d'émission de gaz de pyrolyse est un capteur permettant de déterminer la combustibilité et/ou l'inflammabilité du gaz de pyrolyse.

12. Dispositif selon l'une quelconque des revendications 1 à 11, **caractérisé**
**en ce qu'**au moins un capteur de température (13) est disposé extérieurement au four à pyrolyse (1) et en amont du séparateur d'eau de condensation (21) ou du serpentin de refroidissement (6).

13. Procédé de fonctionnement d'un dispositif selon l'une quelconque des revendications 1 à 12,
où, après chargement du four à pyrolyse avec une cuve de réaction remplie de matériau à carboniser, certains éléments, ou tous les éléments chauffants du four à pyrolyse sont chauffés à une première température de chauffage prescrite lors d'une première phase de la pyrolyse,
une émission de gaz de pyrolyse étant détectée par un moyen de détection d'émission de gaz de pyrolyse,
l'unité de commande commandant les éléments chauffants après détection d'une émission de gaz de pyrolyse, conformément à la régulation à une deuxième température de chauffage prescrite lors d'une deuxième phase de la pyrolyse, laquelle est inférieure à la première température de chauffage, et/ou conformément au réglage de différents groupes d'éléments chauffants en mode de service "OFF",
une température de gaz de pyrolyse étant détectée par un capteur de température,
les éléments chauffants étant commandés par l'unité de commande à la détection d'une température de gaz de pyrolyse prescrite, conformément au réglage de tous les éléments chauffants en mode de service "OFF".

14. Procédé selon la revendication 13, **caractérisé**
**en ce que**, lors de la première phase de la pyrolyse, la première température de chauffage pouvant être générée par les éléments chauffants est comprise entre 650° C et 820° C.

15. Procédé selon la revendication 13 ou la revendication 14, **caractérisé**
**en ce que**, lors de la deuxième phase de la pyrolyse, la deuxième température de chauffage pouvant être générée par les éléments chauffants est comprise entre 450° C et 520° C.

16. Procédé selon l'une quelconque des revendications 13 à 15, **caractérisé**
**en ce que** la température de gaz de pyrolyse prescrite détectable au moyen d'un capteur de température est une température inférieure à 140° C, préférentiellement une température comprise entre 100° C et 110° C.

17. Procédé selon l'une quelconque des revendications 13 à 16, **caractérisé**
**en ce que**, lors de la première phase de la pyrolyse, un chauffage de la cuve de réaction est effectué au moyen des éléments chauffants prévus contre la surface intérieure de l'enveloppe, sur le fond et contre le dessus du four à pyrolyse.

18. Procédé selon l'une quelconque des revendications 13 à 17, **caractérisé**
**en ce que**, lors de la deuxième phase de la pyrolyse, un chauffage de la cuve de réaction est effectué au moyen des éléments chauffants prévus contre la surface intérieure de l'enveloppe et sur le fond du four à pyrolyse.
